# EUROPÄISCHE PATENTSCHRIFT

(11) **EP 2 251 296 B1**
(45) Veröffentlichungstag und Bekanntmachung des Hinweises auf die Patenterteilung: **19.09.2012**
(21) Anmeldenummer: 10004623.4
(22) Anmeldetag: 03.05.2010
(51) Int. Cl.: B66F 9/075, H02G 11/02, H02G 11/00

(54) **Flurförderzeug mit integriertem Ladegerät**
Industrial truck with an integrated loading device
Chariot de manutention doté d'un appareil de chargement intégré

(30) Priorität: 11.05.2009 DE 102009021274
(43) Veröffentlichungstag der Anmeldung: 17.11.2010
(73) Patentinhaber: Jungheinrich Aktiengesellschaft, 22047 Hamburg (DE)
(72) Erfinder: Hildebrand, Lars, 25474 Ellerbek (DE); Knie, Andreas, 20255 Hamburg (DE); Herrmann, Jens, 22395 Hamburg (DE)
(74) Vertreter: Hauck Patent- und Rechtsanwälte

(56) Entgegenhaltungen:
- EP-A1- 0 983 960
- EP-A1- 1 925 587
- GB-A- 2 418 899
- JP-A- 2003 073 099
- US-A- 4 616 872

## Beschreibung

Die vorliegende Erfindung betrifft ein Flurförderzeug mit einem integrierten Ladegerät, das über ein an oder in dem Flurförderzeug mitgeführtes Ladekabel mit Steckverbinder an eine elektrische Stromversorgung anschließbar ist.

Flurförderzeuge mit eingebautem Batterieladegerät können mit einem entsprechenden Kabel direkt an die übliche Netzstromversorgung angeschlossen werden. Der jeweilige Steckverbinder muss zu diesem Zweck leicht zugänglich an dem Flurförderzeug angeordnet sein. Das Kabel sollte für einen reibungsfreien Betrieb des Flurförderzeugs im Fahrzeuginneren verstaut werden können, ohne dass das Ladekabel sich verheddert oder der Steckverbinder im Fahrzeuginnern schwer auffindbar ist. Bei Flurförderzeugen mit eingebautem Batterieladegerät ist ferner zu berücksichtigen, dass bei der Montage des Flurförderzeugs das Ladegerät mit dem damit verbundenen Netzkabel und seinem landesspezifischen Steckverbinder bereits sehr früh verbaut wird. Erst bei der späteren Montage der Verkleidung muss das Ladekabel durch die Verkleidung geführt werden.

Aus EP 0 983 960 A1 ist ein Gabelhubwagen mit Batterien und integriertem Ladegerät bekannt. Das zum Ladegerät rührende Kabel ist auf einer innerhalb der Fahrzeugverkleidung fest eingebauten Kabelaufrolltrommel mit einer Zugentlastung aufgewickelt und durch eine Öffnung in der Fahrzeugverkleidung nach außen geführt.

Aus JP 2003 073 099 A ist eine Halterung für ein Ladekabel bekannt, bei dem das Ladekabel von einem am Fahrzeug fest montierten Haken gehalten ist. Das gehaltene Kabel wird über schwenkbare Deckel in der Ladehalterung verdeckt.

Aus GB 2 418 899 A ist ein Flurförderzeug mit einem integrierten Ladegerät bekannt, das über ein oder in dem Flurförderzeug mitgeführtes Ladekabel mit Steckverbinder an ein elektrisches Stromversorgungsnetz anschließbar ist. Das Ladekabel wird über eine Öffnung in der Fahrzeugverkleidung nach außen geführt.

Der Erfindung liegt die Aufgabe zugrunde, ein Flurförderzeug mit einem integrierten Ladegerät bereitzustellen, bei dem ein Steckverbinder für das an oder in dem Flurförderzeug mitgeführte Ladekabel mit einfachen Mitteln gehalten ist und eine nachträgliche Montage des Steckverbinders an dem Ladekabel vermieden wird.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einem elektrischen Ladegerät ausgestattet, das über ein an oder in dem Flurförderzeug mitgeführtes Ladekabel mit Steckverbinder an eine elektrische Stromversorgung anschließbar ist. Das an die elektrische Stromversorgung angeschlossene Ladegerät kann dann eine Batterie an dem Flurförderzeug wieder aufladen. Das Ladekabel ist über eine Öffnung in der Fahrzeugverkleidung nach außen geführt. Erfmdungsgemäß ist in die Öffnung in der Fahrzeugverkleidung ein Haltering lösbar eingesetzt, dessen Ringöffnung einen Durchmesser aufweist, der den Steckverbinder des durch die Ringöffnung geführten Ladekabels in dem Haltering hält. Der Haltering ist ausgebildet, um geöffnet zu werden, so dass das Ladekabel durch den Haltering geführt werden kann, ohne den Steckverbinder vom Ladekabel zu trennen. Der in die Öffnung in der Fahrzeugverkleidung eingesetzte Haltering hält erfindungsgemäß den elektrischen Steckverbinder, wobei das Ladekabel durch den Haltering geführt ist. Im eingesetzten Zustand ist der Haltering geschlossen. Der Haltering besitzt den Vorteil, dass der Steckverbinder an einer gut zugänglichen Position des Flurförderzeugs gehalten werden kann und zum Anschluss des Flurförderzeugs an die elektrische Stromversorgung für einen Benutzer des Flurförderzeugs griffbereit ist. Ferner stellt der Haltering sicher, dass das in dem Flurförderzeug angeordnete Ladekabel sich nicht verknoten kann, da beide Enden des Ladekabels fixiert sind, ein Ende an dem Ladegerät, ein Ende in dem Haltering. Auch bei der Montage des Flurförderzeugs schafft der Haltering eine erhebliche Arbeitserleichterung, da das Ladegerät mit Ladekabel direkt mit seinem Steckverbinder montiert und das Ladekabel in den geöffneten Haltering eingeführt werden kann.

In einer bevorzugten Ausgestaltung besteht der Haltering aus zwei Elementen, die lösbar miteinander verbunden sind. Der Vorteil dieser Ausgestaltung liegt zudem darin, dass der Haltering aus der Öffnung in der Fahrzeugverkleidung entnehmbar ist, seine Ringelemente geöffnet werden können und so auf das Ladekabel aufgesetzt werden kann.

In einer bevorzugten Ausgestaltung besteht der Haltering aus zwei Ringelementen, die als Gleichteile ausgebildet sind. Die Ausbildung als identische Gleichteile erlaubt es, dass bei der Montage nicht zwischen unterschiedlichen Ringelementen unterschieden werden muss, sondern dass zwei beliebige Ringelemente zusammengesetzt werden können, um den Haltering zu bilden.

In einer bevorzugten Ausgestaltung sind die Ringelemente durch Verbindungsmittel entlang dem Umfang des Halterings miteinander verbunden. Bei den Verbindungsmitteln kann es sich beispielsweise um Schnapp- oder Klickverbindungen handeln. Auch ist es denkbar, dass die Ringelemente über ein Gelenk miteinander verbunden sind, sodass der Haltering geöffnet werden kann, ohne die Ringelemente voneinander zu entfernen.

Bevorzugt weisen die Ringelemente als Verbindungsmittel jeweils Zapfen und Bohrungen auf, die in einer Kontaktfläche der Ringelemente angeordnet sind. Im zusammengesetzten Zustand bilden die Ringelemente den Haltering, wobei die Ringelemente entlang ihrer zwei Kontaktflächen aneinander anliegen. In dieser Kontaktfläche besitzt jedes Ringelement mindestens einen vorstehenden Zapfen und eine entsprechende Bohrung. Im zusammengesetzten Zustand taucht der Zapfen des einen Ringelements in die entsprechende Bohrung des anderen Ringelements ein.

Um eine gute Haltefunktion für den Steckverbinder in dem Haltering bereitzustellen, hat es sich als vorteilhaft herausgestellt, dass der Haltering eine Innenwand aufweist, die einen umlaufenden Absatz besitzt. Die Position des Absatzes innerhalb des Halterings kann dabei so angepasst sein, dass ein in den Haltering eingesetzter Steckverbinder mit seinem zum Ladekabel weisenden Ende an den Absatz in dem Haltering anliegt und teilweise aus dem Haltering vorsteht.

In einer bevorzugten Ausgestaltung weist die Innenwand des Halterings oberhalb des Absatzes auf der nach außen weisenden Seite elastische Zungen auf, die auf ihrer radial nach außen weisenden Seite Rastvorsprünge tragen, um den Haltering in der Öffnung der Fahrzeugverkleidung zu halten. Die Rastvorsprünge hintergreifen im montiertem Zustand des Halterings entsprechende Vorsprünge in der Fahrzeugverkleidung.

Die Erfindung wird nachfolgend anhand eines Ausführungsbeispiels näher erläutert. Es zeigt:
- Fig. 1: den Haltering in seiner zusammengesetzten Form in einer perspek- tivischen Ansicht,
- Fig. 2: den Haltering mit seinen beiden Ringelementen in einer auseinander- gezogenen Position,
- Fig. 3: den in die Fahrzeugverkleidung eingesetzten Haltering in einer Schnitt- ansicht,
- Fig. 4: eine perspektivische Ansicht eines Flurförderzeugs mit einem Haltering (teilweise verdeckt),
- Fig. 5: eine Aufsicht auf das Flurförderzeug aus Fig. 4 von oben mit einem Blick auf den Haltering,
- Fig. 6: einen eingebauten Haltering mit Steckverbinder in einer geschnittenen Ansicht.

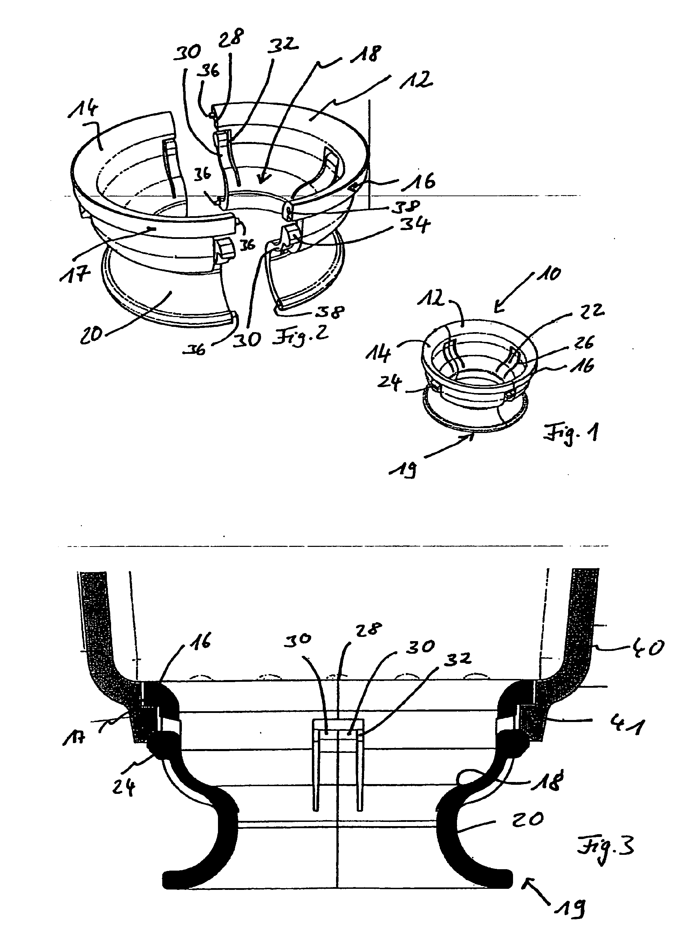

Fig. 1 zeigt einen erfindungsgemäßen Haltering 10, der aus zwei Ringelementen 12 und 14 besteht. Der Haltering 10 besitzt insgesamt eine zylindrische Form, die in der Mitte tailliert ist. An dem Ende besitzt der Haltering 10 einen oberen umlaufenden Rand 16, der einen nach außen vorspringenden Absatz 17 bildet. Die Innenwand des Halterings 10 ist rotationssymmetrisch geformt und bildet einen nach innen vorstehenden Absatz 18. Das von dem oberen Rand 16 fortweisende Ende 19 des Halterings erweitert sich trichterförmig. Die Wand 20 des Halterings 10 steht an dem unteren Ende, das dem oberen Rand 16 gegenüber liegt, radial nach außen ab.

In der Innenwand des Halterings ist mittig eine Rastzunge 22 ausgebildet. Die Rastzunge 22 erstreckt sich in axialer Richtung des Halterings 10 und ist durch einen im Wesentlichen U-förmigen Schnitt 26 von der Innenwand getrennt. Die Rastzunge 22 entspringt im Bereich des Absatzes 18 und erstreckt sich bis unterhalb des oberen Randes 16. An der Außenseite der Rastzunge 22 ist an deren freiem Ende eine Rastnase 24 vorgesehen, die nach außen über die Mantelfläche des Halterings vorsteht. Die Rastzunge 22 ist jeweils mittig in dem Ringelement 12 und 14 vorgesehen.

Nachfolgend mit Bezug auf Fig. 2: Neben der zentralen Rastzunge 22 besitzt jedes Ringelement im Bereich seiner Kontaktfläche 28 zwei weitere Rastzungen 30. Im zusammengesetzten Zustand der Ringelemente 12 und 14 bilden die weiteren Rastzungen 30 der aneinander angrenzenden Ringelemente 12 und 14 eine gemeinsame Rastzunge, die in ihrer Breite ungefähr der Breite der zentralen Rastzunge 22 entspricht. Die weitere Rastzunge 30 ist jeweils von der Innenwand des Ringelements durch einen L-förmigen Schnitt 32 getrennt. Auch die weiteren Rastzungen besitzen jeweils eine außen vorstehende Rastnase 34, die unterhalb des oberen Randes 16 angeordnet ist.

Die Rastzungen 22, 30 und die Rastnasen 24, 34 sind so ausgestaltet, dass sich bei korrekter Einbaulage wieder eine glatte und nur durch die Schnitte 26, 32 unterbrochene Innenfläche des Ringes ergibt. Eine nicht vollständig eingerastete Zunge 22 oder 30 und somit ein nicht korrekt montierter Ring sind sofort von außen an den nach innen überstehenden Rastzungen zu erkennen. Durch einfaches Nachdrücken des Ringes oder einzelner Rastzungen kann die korrekte Einbaulage hergestellt werden.

In der Kontaktfläche 28 besitzt jedes Ringelement auf einer Seite zwei Zapfen 36, von denen einer oberhalb der Rastnase 34 angeordnet und der andere in dem trichterförmig sich erweiternden unteren Ende des Ringelements 12 vorgesehen ist. Die andere Seite jedes Ringelements ist mit entsprechenden Bohrungen 38 versehen, deren Durchmesser dem Durchmesser des Zapfens 36 entspricht. Zapfen 36 und Bohrung 38 sind entsprechend an der zweiten Kontaktfläche des Ringelements 12 vorgesehen.

Ringelement 12 und Ringelement 14 sind als Gleichteile ausgebildet, d. h. beide Teile sind identisch geformt. Dementsprechend treffen bei einem Zusammensetzen von Ringelement 12 und Ringelement 14 die Zapfen 36 auf gegenüberliegende Bohrungen 38 in dem Ringelement 14 und die Bohrungen 38 in dem Ringelement 12 nehmen gegenüberliegende Zapfen 36 des Ringelements 14 auf.

Fig. 3 zeigt das erfindungsgemäße Element in der geschnittenen Form. Wie deutlich in Fig. 3 zu erkennen, besitzt das Ringelement eine im Wesentlichen kelchförmige Kontur, wobei sich der untere Bereich des Halterings trichterförmig im Bereich 19 der Wand 20 erweitert. Der Haltering 10 in Fig. 3 ist in eine Ausnehmung der Fahrzeugverkleidung 40 eingesetzt. Zum sicheren Halt des Halterings in der Fahrzeugverkleidung liegt der Rand 16 in einem umlaufenden Vorsprung 41 an der Fahrzeugverkleidung auf und wird durch die Rastnasen 24 und 34 unterhalb des Vorsprungs 41 in der Fahrzeugverkleidung gesichert.

Der Winkel der schrägen ringförmigen Kontaktfläche zwischen der Oberseite der Rastnasen und der Verkleidung ist so gewählt, dass sich die Rastzungen bei höheren Zugbelastungen nicht nach innen schieben und den Ring aus der Verkleidung lösen oder seitlich aufspreizen und abbrechen, wie es bei einer annähernd radial zum Ringelement liegenden Fläche der Fall sein könnte. Dadurch wird auch beim Zug an einem beispielsweise unterhalb des Ringes verknoteten Kabel der sichere Halt des Ringes in der Verkleidung weitestgehend sichergestellt.

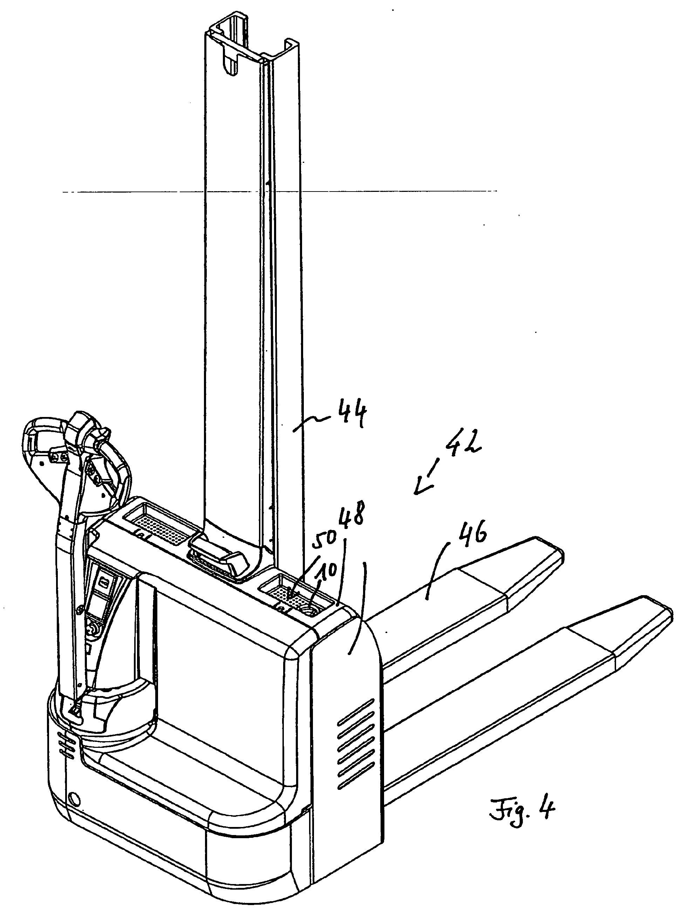

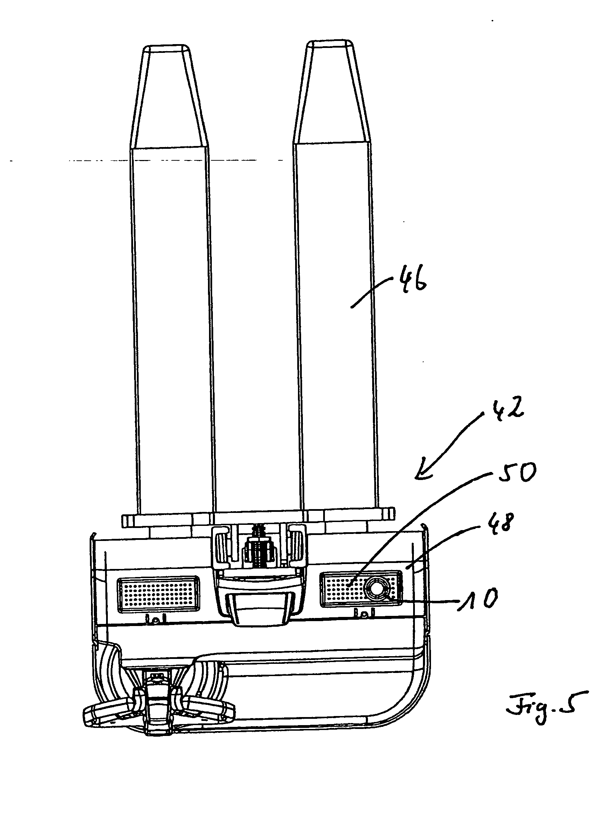

Fig. 4 zeigt ein Flurförderzeug 42 mit einem Mast 44 und einen Lastschlitten mit Gabeln 46. Die Batterie und das Ladegerät sind durch eine Fahrzeugverkleidung 48 abgedeckt. In der Fahrzeugverkleidung 48 ist auf der oberen Seite eine Mulde 50 ausgeformt, in deren Boden der Haltering 10 eingesetzt ist. Fig. 5 zeigt das Flurförderzeug 42 in einer Aufsicht von oben, in der die rechteckige Mulde 50 mit dem Haltering 10 dargestellt ist.

Unter der Fahrzeugverkleidung 48 befindet sich eine elektrische Batterie zur Versorgung des Flurförderzeugs sowie ein Ladegerät, mit dem die Batterie wieder aufgeladen werden kann. Batterie und Ladegerät sind nicht notwendig unter der selben Verkleidung bzw. nicht im selben Bauraum angeordnet. In dem dargestellten Ausführungsbeispiel wird das Netzkabel aus einer Austrittsstelle in der Batterieraumverkleidung geführt, es kann aber durch andere Verkleidungsteile, wie beispielsweise die Fronthaube nach außen geführt werden.. Der Steckverbinder ist beim regulären Gebrauch des Flurförderzeugs in dem Haltering 10 angeordnet, wobei das Ladekabel zu dem Ladegerät sodann innerhalb des Flurförderzeugs durch die Fahrzeugverkleidung verdeckt verläuft.

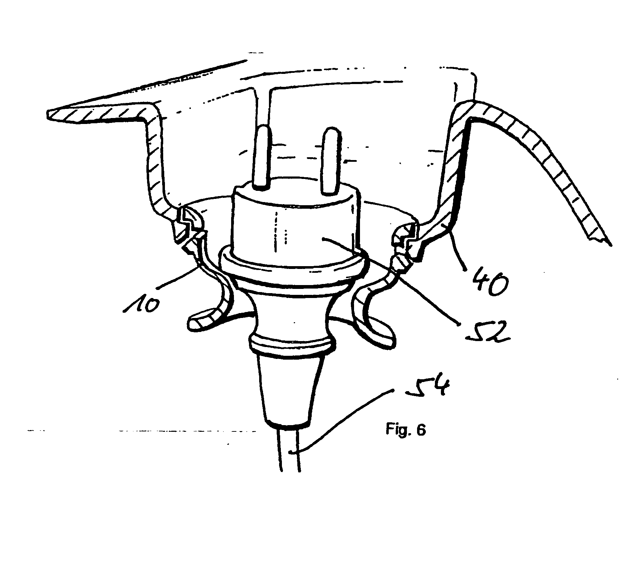

Fig. 6 zeigt den in die Verkleidung 40 eingesetzten Haltering 10, in dem ein Steckverbinder 52 gehalten ist. Das Ladekabel 54 zu dem Steckverbinder 52 ist dabei durch den Haltering 10 geführt.

## Patentansprüche

1. Flurförderzeug (42) mit einem integrierten Ladegerät, das über ein an oder in dem Flurförderzeug mitgeführtes Ladekabel (54) mit Steckverbinder (52) an ein elektrisches Stromversorgungsnetz anschließbar ist, wobei das Ladekabel (54) über eine Öffnung in der Fahrzeugverkleidung (48) nach außen geführt ist, **dadurch gekennzeichnet, dass** in der Öffnung ein Haltering (10) lösbar eingesetzt ist, dessen Ringöffnung einen Durchmesser aufweist, der den Steckverbinder (52) des durch die Ringöffnung geführten Ladekabels (54) in dem Haltering (10) hält, wobei der Haltering (10) geöffnet werden kann, um das Ladekabel (54) durch den Haltering (10) zu führen.

2. Flurförderzeug nach Anspruch 1, **dadurch gekennzeichnet, dass** der Haltering zwei Ringelemente (12, 14) aufweist, die lösbar miteinander verbunden sind.

3. Flurförderzeug nach Anspruch 2, **dadurch gekennzeichnet, dass** die Ringelemente (12, 14) als Gleichteile ausgebildet sind.

4. Flurförderzeug nach Anspruch 2 oder 3, **dadurch gekennzeichnet, dass** die Ringelemente (12, 14) über Verbindungsmittel (36, 38) entlang dem Umfang des Halterings miteinander verbunden sind.

5. Flurförderzeug nach Anspruch 4, **dadurch gekennzeichnet, dass** die Ringelemente (12, 14) als Verbindungselement Zapfen (36) und Bohrungen (38) aufweisen, die in einer Kontaktfläche (28) der Ringelemente (12, 14) angeordnet sind.

6. Flurförderzeug nach einem der Ansprüche 1 - 5, **dadurch gekennzeichnet, dass** der Haltering (10) eine Innenwand aufweist, die einen umlaufenden Absatz (18) besitzt.

7. Flurförderzeug nach Anspruch 6, **dadurch gekennzeichnet, dass** die Innenwand oberhalb des Absatzes (18) auf der zum Steckverbinder weisenden Seite elastische Zungen (22, 30) aufweist, die auf der nach außen liegenden Seite Rastnasen (24, 34) tragen, um den Haltering in der Öffnung der Fahrzeugverkleidung zu halten.

## Claims

1. An industrial truck (42) with an integrated charging device that is connectable to electrical power supply by means of a charging cable (54) with a plug-in connector (52) carried in or on the industrial truck, wherein the charging cable (54) is guided to the outside through an opening in the vehicle paneling (48), **characterized in that** a retaining ring (10) is releasably inserted in the opening, and its ring opening has a diameter which holds in the retaining ring (10) the plug-in connector (52) of the charging cable (54) running through the ring opening, wherein the retaining ring (10) can be opened to guide the charging cable (54) through the retaining ring (10).

2. The industrial truck according to claim 1, **characterized in that** the retaining ring has two ring elements (12, 14) that are releasably connected to each other.

3. The industrial truck according to claim 2, **characterized in that** the ring elements (12, 14) are designed as identical parts.

4. The industrial truck according to claim 2 or 3, **characterized in that** the ring elements (12, 14) are connected to each other by connecting means (36, 38) along the perimeter of the retaining ring.

5. The industrial truck according to claim 4, **characterized in that** the ring elements (12, 14) have pins (36) and drill holes (38) as the connecting element which are arranged in a contact surface (28) of the ring elements (12, 14).

6. The industrial truck according to one of claims 1-5, **characterized in that** the retaining ring (10) as an inner wall that possesses a peripheral ledge (18).

7. The industrial truck according to claim 6, **characterized in that** the inner wall above the ledge (18) on the side facing the plug-in connector has elastic tongues (22, 30) that have snap-in noses (24, 34) to hold the retaining ring in the opening of the vehicle paneling.

## Revendications

1. Chariot de manutention (42) doté d'un appareil de chargement intégré qui peut être raccordé à un réseau d'alimentation en courant électrique par le biais d'un câble de chargement (54) avec connecteur (52) embarqué sur ou dans le chariot de manutention, le câble de chargement (54) étant guidé vers l'extérieur par le biais d'une ouverture dans l'habillage du véhicule (48), **caractérisé en ce que**, dans l'ouverture, il est mis en place de façon détachable une bague de retenue (10) dont l'ouverture annulaire présente un diamètre qui retient dans la bague de retenue (10) le connecteur (52) du câble de chargement (54) guidé à travers l'ouverture annulaire, la bague de retenue (10) pouvant être ouverte pour guider le câble de chargement (54) à travers la bague de retenue (10).

2. Chariot de manutention selon la revendication 1, **caractérisé en ce que** la bague de retenue présente deux éléments annulaires (12, 14) qui sont raccordés l'un à l'autre de façon détachable.

3. Chariot de manutention selon la revendication 2, **caractérisé en ce que** les éléments annulaires (12, 14) sont constitués en tant que parties identiques.

4. Chariot de manutention selon la revendication 2 ou 3, **caractérisé en ce que** les éléments annulaires (12, 14) sont raccordés l'un à l'autre par le biais de moyens de raccordement (36, 38) le long de la circonférence de la bague de retenue.

5. Chariot de manutention selon la revendication 4, **caractérisé en ce que** les éléments annulaires (12, 14) présentent, comme élément de raccordement, des tenons (36) et des alésages (38) qui sont disposés dans une surface de contact (28) des éléments annulaires (12, 14).

6. Chariot de manutention selon une des revendications 1 - 5, **caractérisé en ce que** la bague de retenue (10) présente une paroi intérieure qui possède un épaulement (18) périphérique.

7. Chariot de manutention selon la revendication 6, **caractérisé en ce que** la paroi intérieure au-dessus de l'épaulement (18) présente, sur le côté dirigé vers le connecteur, des languettes (22, 30) élastiques qui portent, sur le côté situé vers l'extérieur, des becs d'encliquetage (24, 34) pour retenir la bague de retenue dans l'ouverture de l'habillage du véhicule.
